# EUROPÄISCHE PATENTANMELDUNG

(11) **EP 4 838 172 A1**
(43) Veröffentlichungstag der Anmeldung: **11.11.2026**
(21) Anmeldenummer: 26175791.8
(22) Anmeldetag: 30.04.2026
(51) Int. Cl.: G01B 11/25, G01N 21/86, G01N 21/89, G01B 11/30, G01N 21/87, G01N 21/892

(54) **SYSTEM ZUR INLINE-BESTIMMUNG DER PLANLAGE EINER MATERIALBAHN**

(30) Priorität: 07.05.2025 DE 102025117528
(71) Anmelder: Brückner Maschinenbau GmbH, 83313 Siegsdorf (DE)
(72) Erfinder: Markus, Romstätter, 83349 Palling (DE)
(74) Vertreter: Flach Bauer & Partner Patentanwälte mbB

(57) **Zusammenfassung**

Die vorliegende Erfindung betrifft ein System zur Inline-Bestimmung der Planlage einer Materialbahn, insbesondere einer Kunststofffolie, sowie eine Anlage zur Herstellung einer Materialbahn umfassend das System, sowie ein Verfahren zur Inline-Bestimmung der Planlage einer Materialbahn. Das System 100 umfasst eine Steuereinheit sowie eine Vielzahl von optischen Flächensensoren 230 und eine Vielzahl von Linienlaserquellen 210. Jedem optischen Flächensensor 230 ist zumindest eine Linienlaserquelle 210 zugeordnet. Die Linienlaserquellen sind dazu eingerichtet, je zumindest eine Laserlinie 212 auf die Materialbahn A zu projizieren, wobei die Laserlinien 212 im Wesentlichen in einer Querrichtung T der Materialbahn A orientiert sind und sich über zumindest eine Teilbreite der Materialbahn A erstrecken. Die optischen Flächensensoren 230 sind dabei so ausgerichtet, dass sie Bilddaten zumindest einer projizierten Laserlinie 212 einer ihnen zugeordneten Linienlaserquelle 210 erfassen. Weiterhin ist die Steuereinheit 240 dazu eingerichtet, basierend auf den erfassten Bilddaten die Planlage der Materialbahn A zu bestimmen.

## Beschreibung

### Gebiet der Erfindung

Die Erfindung betrifft ein System zur Inline-Bestimmung der Planlage einer Materialbahn, insbesondere einer Kunststofffolie, sowie eine Anlage zur Herstellung einer Materialbahn umfassend das System, sowie ein Verfahren zur Inline-Bestimmung der Planlage einer Materialbahn.

### Hintergrund

Die sog. Planlage (engl. Flatness) ist sowohl während des Produktionsprozesses als auch im Endprodukt ein wichtiges Qualitätskriterium von Materialbahnen, wie beispielsweise (verstreckten) Kunststofffolien. Angestrebt wird eine möglichst ebene Materialbahn. Die ideale Planlage ist gegeben, wenn die Materialbahn in einer gedachten Ebene liegt.

Abweichungen bzw. Planlagedefekte entstehen, wenn lokal zu viel oder zu wenig flächiges Material vorhanden ist. Dies führt zur Verwerfung bzw. zum Auslenken der Materialbahn aus der ideal gedachten Ebene. Beispielsweise kann eine Materialbahn lokal wellig sein, durchhängen und/oder aufstehen. Insbesondere die Ränder der Materialbahn können herabhängen, aufstehen und/oder schwingen.

Diese Planlagendefekte führen zu unterschiedlichen Längen M₁, ... Mₘ der Materialbahn in Längsrichtung M, gemessen an unterschiedlichen Querpositionen in Querrichtung T der Materialbahn. Des Weiteren führen die Planlagedefekte zu unterschiedlichen Breiten T₁, ... Tₙ der Materialbahn in Querrichtung T, gemessen an unterschiedlichen Längspositionen in Längs- bzw. Abzugsrichtung M der Materialbahn. Diese Längen- und Breitenunterschiede können beim Auf- und Abwickeln der Materialbahn zu Ungleichmäßigkeiten führen. Diese Ungleichmäßigkeiten können beispielsweise zur Faltenbildung führen. Ebenso ist es möglich, dass die Ränder der Materialbahn durchhängen, oder sich beispielsweis in der Mitte der Materialbahn durchhängende, sackähnliche Bereiche ausbilden. Hierdurch kann nicht nur das Auf- bzw. Abwickeln der Materialbahn beeinträchtigt werden, sondern beispielsweise auch die Weiterverarbeitung.

Diese unterschiedlichen Längen und/oder Breiten bzw. Planlagendefekte treten bereits bei der Herstellung der Materialbahn, d.h. Inline, auf. Bei der Herstellung von Materialbahnen, wie beispielsweise Folien, insbesondere Kunststofffolien, können die Längen- und/oder Breitenunterschiede beispielsweise bei der Extrusion, beim Abkühlen der Schmelze, beim Längsverstrecken, beim Querverstrecken und/oder beim Simultanverstrecken auftreten.

Allerdings sind Planlagendefekte, insbesondere von (transparenten) Kunststofffolien, mit bekannten Techniken nicht oder nicht ausreichend genau inline detektierbar.

Daher wird bei der Herstellung von Materialbahnen, insbesondere bei der Herstellung von Kunststofffolien, zur Bestimmung der Planlage die Länge der Materialbahn an unterschiedlichen Positionen in Breitenrichtung manuell gemessen. Dies ist erst möglich, nachdem die Folie aufgewickelt und aus der Anlage zur Herstellung der Materialbahn entnommen wurde. Dies bedeutet, dass zwischen dem Herstellungszeitpunkt der Materialbahn und der Bestimmung der Planlage viel Zeit, typischerweise mehrere Stunden, vergeht.

Dies ist unerwünscht, da die Planlage durch die Anpassung von Prozessparametern, wie beispielsweise der Temperierung der Materialbahn, der Materialbahnspannung, usw. verbessert werden kann. Eine späte Bestimmung der Planlage führt mithin zu einer verminderten Qualität, da erst spät auf etwaige erkannte Planlagendefekte mit der Anpassung von Prozessparametern reagiert werden kann.

Des Weiteren ist die manuelle Messung zeitintensiv, unpräzise und fehleranfällig und erfordert überdies das teilweise Abrollen der bereits aufgewickelten Materialbahn.

### Beschreibung der Erfindung

Vor diesem Hintergrund ist es die Aufgabe der vorliegenden Erfindung, ein System zur Bestimmung der Planlage einer Materialbahn, insbesondere einer Folie, bereitzustellen, welches die Bestimmung der Planlage Inline, d.h. während dem Herstellungsprozess, ermöglicht. Weiterhin ist es die Aufgabe der vorliegenden Erfindung eine verbesserte Anlage zur Herstellung einer Materialbahn bereitzustellen, sowie ein Verfahren zur Bestimmung der Planlage einer Materialbahn.

Materialbahnen im Sinne der vorliegenden Offenbarung sind beispielweise Folien, insbesondere Kunststofffolien. Entsprechend kann die Materialbahn ein Castfilm, eine monoaxial orientierte Kunststofffolie (z. B. längs- oder querverstreckt) oder eine biaxial orientierte Kunststofffolie sein. Weiterhin kann die Kunststofffolie transparent oder opak sein. Weitere Materialbahnen umfassen metallische Folien sowie textile Produkte, wie Vliese, Gewebe, und/oder dergleichen.

Die Aufgabe wird durch ein System zur Bestimmung, insbesondere Inline-Bestimmung, der Planlage einer Materialbahn nach Anspruch 1, sowie durch eine Anlage zur Herstellung einer Materialbahn nach Anspruch 13 und durch ein Verfahren nach Anspruch 14 gelöst. Weitere Aspekte der Erfindung sind in den abhängigen Ansprüchen, sowie in der nachfolgenden Beschreibung genannt.

Insbesondere wird die Aufgabe durch ein System zur (Inline-)Bestimmung der Planlage einer Materialbahn gelöst. Das System umfasst eine Steuereinheit sowie eine Vielzahl von optischen Flächensensoren und eine Vielzahl von Linienlaserquellen. Insbesondere sind zumindest zwei optische Flächensensoren und zumindest zwei Linienlaserquellen vorgesehen. Die optischen Flächensensoren können beispielsweise Kameras, insbesondere (monochrome) Flächenkameras sein.

Jedem optischen Flächensensor ist zumindest eine Linienlaserquelle zugeordnet. Die Linienlaserquellen sind dazu eingerichtet, je zumindest eine Laserlinie auf die Materialbahn A zu projizieren. Ebenso ist es möglich, dass einem optischen Flächensensor mehrere Linienlaserquellen zugeordnet sind, beispielsweise zumindest 2 oder zumindest 3, oder zumindest 4. Dies erlaubt es kürzere Linien mit einer höheren Intensität auf die Materialbahn zu projizieren. Hierdurch kann die Sichtbarkeit der auf die Materialbahn projizierten Laserlinien und damit die Detektierbarkeit durch den entsprechenden Flächensensor verbessert werden.

Ebenso ist es möglich, dass eine Linienlaserquelle mehreren (zumindest zwei) Flächensensoren zugeordnet ist. Den mehreren Flächensensoren kann also zumindest eine (gemeinsame) Linienlaserquelle zugeordnet sein. Mithin kann eine Linienlaserquelle dazu eingerichtet sein, mehrere Laserlinien auf die Materialbahn A zu projizieren, die von unterschiedlichen Flächensensoren erfasst werden.

Die Linienlaserquellen können Laserlicht im IR-Bereich, im sichtbaren Bereich oder im UV-Bereich emittieren. Die genutzte Laserfrequenz ist insbesondere von dem Material bzw. dem Reflexionsverhalten der Materialbahn abhängig. Für Folien, insbesondere Kunststofffolien (z. B. BOPP-Folien, BOPET-Folien, ...) zeigen insbesondere Linienlaserquellen die im sichtbaren Bereich emittieren gutes Reflexionsverhalten. Beispielsweise können hier rote, blaue oder grüne Laserquellen genutzt werden.

Die Materialbahn ist insbesondere eine bewegte Materialbahn, die in einer Anlage zur Herstellung oder Weiterverarbeitung der Materialbahn geführt wird. Beispielsweise kann die Materialbahn mit einer Materialbahngeschwindigkeit von zumindest 400 m/min, oder zumindest 500m/min, oder zumindest 600 m/min, oder zumindest 700 m/min, oder zumindest 800 m/min geführt werden. Trotz dieser hohen Materialbahngeschwindigkeiten, kann mit dem erfindungsgemäßen System die Planlage der Materialbahn Inline bestimmt werden.

Insbesondere kann die Anlage eine Anlage zur Herstellung oder Weiterverarbeitung einer Folie, insbesondere einer Kunststofffolie sein. Entsprechend kann die Materialbahn ein Castfilm, eine monoaxial orientierte Kunststofffolie (z. B. Längs- oder querverstreckt) oder eine biaxial orientierte Kunststofffolie sein. Weiterhin kann die Kunststofffolie transparent oder opak sein. Beispiele für transparente Folien sind beispielsweise biaxial orientierte Polypropylen - BOPP - Folien und BOPP-C-Folien, oder biaxial orientierte Polyethylenterephthalat - BOPET - Folien. Polyethylenfolien, insbesondere BOPE-Folien, weisen typischerweise einen höheren Haze-Wert auf und sind mithin weniger transparent, als beispielsweise BOPP-Folien. Ein Beispiel für opake Folien sind mikroporöse Batterieseparatorfolien (BSF), wie sie beispielsweise in Li-Ionen-Batterien zum Einsatz kommen. Diese BSF-Folien können beispielsweise PP, PE oder UHMWPE umfassen.

Das erfindungsgemäße System ist insbesondere zur Inline-Bestimmung der Planlage von transparenten und opaken Kunststofffolien geeignet, jedoch nicht darauf beschränkt. Weitere Materialbahnen umfassen metallische Folien sowie textile Produkte, wie Vliese, Gewebe, und/oder dergleichen.

Zumindest eine der projizierten Laserlinien kann eine durchgehende Laserlinie, oder eine unterbrochene Laserlinie, insbesondere eine gepunktete Laserlinie oder eine Strich-Punkt-Linie sein. Zudem ist es möglich, dass eine Linienlaserquelle mehrere, im Wesentlichen parallele Laserlinien auf die Materialbahn projiziert.

Weiterhin sind die projizierten Laserlinien im Wesentlichen in einer Querrichtung T der Materialbahn orientiert und erstrecken sich über zumindest eine Teilbreite der Materialbahn. Der Bereich der Materialbahn dessen Planlage bestimmt werden soll, muss dabei von zumindest einer Laserlinie überspannt werden. Soll die Planlage über die gesamte Breite der Materialbahn bestimmt werden, ist es notwendig, dass sich die Laserlinien über die gesamte Breite der Materialbahn erstrecken, wobei einzelne Laserlinien nur einen Abschnitt der Materialbahn in Querrichtung erfassen müssen. Soll die Planlage beispielsweise nur in einem Randbereich der Materialbahn erfasst werden, ist es ausreichend, dass die Laserlinien auf den Randbereich projiziert werden.

Die von den Laserlinien überspannte Teilbreite der Materialbahn kann im Bereich von 3% bis 99% der Breite der Materialbahn liegen, oder im Bereich von 5% bis 90%, oder im Bereich von 10% bis 70%, oder im Bereich von 12% bis 65%.

Die optischen Flächensensoren sind dabei so ausgerichtet, dass sie Bilddaten zumindest einer projizierten Laserlinie einer ihnen zugeordneten Linienlaserquelle erfassen. Weiterhin ist die Steuereinheit dazu eingerichtet, basierend auf den erfassten Bilddaten die Planlage der Materialbahn zu bestimmen.

Insbesondere wird die Planlage für den Bereich der Materialbahn bestimmt, auf welchen die Laserlinien projiziert werden. Wird die Materialbahn bewegt, kann die Planlage an unterschiedlichen Längspositionen in Längs- bzw. Abzugsrichtung M der Materialbahn bestimmt werden. Dies erlaubt es die Planlage der gesamten Materialbahn zu bestimmen.

Die Planlage der Materialbahn kann beispielsweise in Form eines Höhenprofils auf einer grafischen Anzeigevorrichtung, z. B. einem Display, grafisch visualisiert bzw. angezeigt werden.

Mithin sind Abweichungen von der idealen Planlage gut zu identifizieren. Insbesondere kann ein zeitlicher Höhenprofilverlauf, beispielsweise in Form eines einhüllenden Höhenprofils angezeigt werden. Neben der grafischen Visualisierung können auch Kennwerte für die Güte der Planlage bestimmt und mittels der Anzeigevorrichtung angezeigt werden. Beispiele für entsprechende Güte-Kennwerte sind die mittlere Folienhöhe, die Standardabweichung des Höhenprofils zu einer Regressionsgeraden, etc. Insbesondere können die Kennwerte über ein Zeitintervall gemittelt sein.

Das System basiert dabei insbesondere auf dem Prinzip der Lasertriangulation. Wenn sich die Planlage bzw. Höhenposition der Materialbahn an einer Stelle ändert, weil die Materialbahn lokal beispielsweise durchhängt, verschiebt sich die projizierte Laserlinie in den erfassten Bilddaten. Diese Verschiebung korreliert mit der Änderung der Planlage und kann so zur Bestimmung der Planlage dienen.

Das erfindungsgemäße System erlaubt eine hohe Messauflösung in Querrichtung T der Materialbahn. So kann jeder optische Flächensensor eine Reihe von Pixelspalten aufweisen, wobei jede Pixelspalte einen Messwert für die Position der projizierten Laserlinie darstellt. Insbesondere kann eine Messauflösung in Querrichtung von < 2 mm, oder von < 1 mm, oder von < 0.5 mm erreicht werden.

Die Messauflösung des Systems in Höhenrichtung Z der Materialbahn kann beispielsweise < 0,2 mm, oder < 0,1 mm, oder < 0,05 mm sein. Die Messauflösung in Höhenrichtung Z bestimmt sich u.a. aus der vertikalen Höhe eines Pixels projiziert auf die Materialbahn. Weist ein Flächensensor beispielsweise 1000 Pixelspalten auf, und können Höhenabweichungen von ±50 mm erfasst werden, ist eine Messauflösung in Höhenrichtung Z von etwa 0.1 mm möglich (ein Pixel entspricht 0.1mm).

Die Messauflösung kann durch eine subpixelgenaue Extraktion einer Mittellinie der projizierten Laserlinien in den erfassten Bilddaten weiter gesteigert werden.

Entsprechend können sehr kleine Planlagendefekte erkannt werden. Durch eine entsprechende (automatisierte oder manuelle) Anpassung der Prozessparameter bei der Herstellung der Materialbahn kann die Qualität der Materialbahn durch eine Verbesserung der Planlage signifikant gesteigert werden.

Da die Bestimmung der Planlage Inline erfolgt, kann zudem sehr schnell auf Planlagendefekte mit entsprechenden Anpassungen der Prozessparameter reagiert werden. Insbesondere kann die Temperierung der Materialbahn, die Materialbahnspannung, und/oder entsprechende Prozessparameter angepasst werden. Für Kunststofffolien hat sich gezeigt, dass insbesondere die Anpassung der Temperierung der Folie in der Kühlzone beim Querverstrecken maßgeblichen Einfluss auf die Planlage der Materialbahn hat. Beispielsweise kann Inline, also während der Folienherstellung, die Luftführung in der Kühlzone verändert werden. Dies kann beispielsweise mittels steuerbarer Lüfter, Ventilen und/oder Luftführungsklappen erfolgen.

Zudem zeichnet sich das erfindungsgemäße System dadurch aus, dass es die Planlage von transparenten Kunststofffolien, welche zusätzlich sehr niedrige diffuse Reflektivitäten aufweisen können (z. B. BOPP, POPET), bestimmen kann.

Weiterhin kann jedem optischen Flächensensor ein Bilderfassungsbereich zugeordnet sein, wobei sich die Bilderfassungsbereiche benachbarter optischer Flächensensoren in der Querrichtung T der Materialbahn in zumindest einem Schnittbereich überschneiden können. Dies ermöglicht die Lückenlose Bestimmung der Planlage.

Beispielsweise kann der Bilderfassungsbereich eine Breite von 25 cm bis 100 cm, oder eine breite von 30 cm bis 50 cm aufweisen. Der Bilderfassungsbereich ist u.a. vom Abstand des optischen Flächensensors von der Materialbahn und von dem Öffnungswinkel γ_{T} abhängig. Eine projizierte Laserlinie kann eine Breite von 10 cm bis 100 cm, oder eine breite von 15 cm bis 50 cm aufweisen.

Durch die Aufreihung einer ausreichend großen Anzahl von optischen Flächensensoren und/oder Linienlaserquellen, kann die Planlage für große Materialbahnbreiten bestimmt werden. Beispielsweise liegt die Materialbahnbreite in einem Bereich von 4 m bis 25 m, oder in einem Bereich von 6 m bis 18 m, oder in einem Bereich von 8 m bis 14 m.

Ein einem Aspekt sind die optischen Flächensensoren unter einem Blickwinkel β auf die Materialbahn gerichtet, wobei der Blickwinkel β in einem Bereich von ±45° zu einer Normalen auf die Materialbahn A, oder in einem Bereich von ±30°, oder in einem Bereich von ±15° liegt kann, wobei der Blickwinkel β insbesondere in oder entgegen einer Längsrichtung M der Materialbahn A geneigt ist.

Die Linienlaserquellen und/oder zumindest eine Positionslaserquelle (nachstehend beschrieben) können weiterhin so auf die Materialbahn gerichtet sein, dass ein entsprechender Laserstrahl unter einem Einfallswinkel α auf die Materialbahn trifft. Der Einfallswinkel α ist dabei beispielsweise in einem Bereich von ±15° zu einer Normalen auf die Materialbahn, oder in einem Bereich von ±10°, oder in einem Bereich von ±5°, wobei der Einfallswinkel α insbesondere in oder entgegen einer Längsrichtung der Materialbahn geneigt ist.

Insbesondere sind die optischen Flächensensoren und die Linienlaserquellen (bzw. Positionslaserquelle(n)) so zueinander ausgerichtet, dass die gerichtete Reflexion der Laserstrahlen nicht auf die optischen Flächensensoren fällt. Beispielsweise können die optischen Flächensensoren und die Linienlaserquellen so auf die Materialbahn gerichtet sein, dass die Blickrichtung und die Projektionsrichtung einen Winkel einschließen, der im Bereich von 10° bis 70°, oder im Bereich von 15° bis 45° oder im Bereich von 20° bis 35° liegt.

Anstelle der gerichteten Reflexion der Laserstrahlen erfassen die optischen Flächensensoren vorzugsweise eine diffuse Reflexion. Die obigen Winkelbereiche haben sich dabei als besonders vorteilhaft für die Bestimmung der Planlage von Kunststofffolien gezeigt, da Kunststofffolien eine Vorzugsrichtung bei der diffusen Reflexion in Richtung der gerichteten Reflexion zeigen. Je nach räumlicher Anordnung der Linienlaserquellen (bzw. Positionslaserquelle(n)) und optischen Flächensensoren erscheint dadurch die Laserlinie im erfassten Bild unterschiedlich hell.

Beispielsweise können die Linienlaserquellen (bzw. Positionslaserquelle(n)) im Wesentlichen lotrecht auf die Materialbahn projizieren, während die optischen Flächensensoren einen geneigten Blickwinkel aufweisen. Ebenso ist es möglich, dass die optischen Flächensensoren im Wesentlichen lotrecht auf die Materialbahn gerichtet sind und die Linienlaserquellen (bzw. Positionslaserquelle(n)) unter einem geneigten Einfallswinkel projizieren. Ebenfalls ist es möglich, dass weder die Linienlaserquellen (bzw. Positionslaserquelle(n)) noch die optischen Flächensensoren im Wesentlichen lotrecht auf die Materialbahn gerichtet, sondern geneigt sind. Die Materialbahn kann zudem im Wesentlichen horizontal, im Wesentlichen vertikal oder unter einem Winkel geführt sein.

Weiterhin können die optischen Flächensensoren einen Öffnungswinkel γ_{M} in Längsrichtung M der Materialbahn aufweisen, der im Bereich von ±10°, oder im Bereich von ±5°, oder im Bereich von ±3° liegt. Der Öffnungswinkel γ_{M} bestimmt die Ausdehnung des Bilderfassungsbereichs in der Längsrichtung. Durch die Wahl des Öffnungswinkels γ_{M} kann der Bilderfassungsbereich auf ein erforderliches Minimum reduziert werden. Dies ermöglicht es, die Menge an erzeugten Bilddaten zu reduzieren und somit die Verarbeitungsgeschwindigkeit der erzeugten Bilddaten zu erhöhen.

Weiterhin wird durch den Öffnungswinkel, den Abstand der Flächensensoren von der Materialbahn (und die Tiefenschärfe der Flächensensoren) die maximal bestimmbare Abweichung der Planlage definiert.

Zudem können die optischen Flächensensoren einen Öffnungswinkel γ_{T} in Querrichtung T der Materialbahn aufweisen, der im Bereich von ±45°, oder im Bereich von ±30°, oder im Bereich von ±20° liegt. Der Öffnungswinkel γ_{T} bestimmt die Ausdehnung (Breite) des Bilderfassungsbereichs in der Querrichtung. Zur Erzielung einer höheren Lichtintensität sind Linienlaserquellen und optischen Flächensensoren mit geringem Öffnungswinkel vorteilhaft.

Weiterhin können die Linienlaserquellen so angeordnet sein, dass sich die projizierten Laserlinien in Querrichtung T zumindest teilweise überlappen.

Somit kann eine lückenlose Bestimmung der Planlage in Querrichtung T erfolgen. Optional sind die Linienlaserquellen dabei so angeordnet, dass benachbarte Laserlinien in Längsrichtung M versetzt zueinander projiziert werden, sodass sie sich nicht überlagern. Mithin können unerwünschte Überbelichtungen und/oder Interferenzen vermieden werden.

Weiterhin kann das System zumindest eine Positionslaserquelle umfassen. Diese Positionslaserquelle kann in den Schnittbereich der Bilderfassungsbereiche benachbarter optischer Flächensensoren eine Positionsmarkierung (z. B. ein Laserpunkt, ein Laserkreuz, eine in Längsrichtung orientierte Laserlinie, oder dergleichen) auf die Materialbahn projizieren. Diese Positionsmarkierung ermöglicht es die erfassten Bilddaten der unterschiedlichen optischen Flächensensoren in Deckung zu bringen und so eine kalibrierte Planlage zu bestimmen bzw. ein kalibriertes Höhenprofil über die gesamte Breite der Materialbahn zu erstellen. Dies kann insbesondere mittels der Steuereinheit erfolgen.

Weiterhin kann das System zumindest einen Bandpassfilter, welcher zumindest einem der optischen Flächensensoren zugeordnet ist umfassen. Vorzugsweise ist jedem optischen Flächensensor ein Bandpassfilter zugeordnet. Der Bandpassfilter ist insbesondere dazu eingerichtet, ausschließlich Licht zu dem optischen Flächensensor passieren zu lassen, welches von den Linienlaserquellen und/oder der zumindest einen Positionslaserquelle emittiert wurde. Mithin kann effektiv verhindert werden, dass Fremdlicht die optischen Flächensensoren stört.

Weiterhin können die optischen Flächensensoren eine Belichtungszeit im Bereich von 1 ms bis 5 ms, oder im Bereich von 1.5 ms bis 3 ms aufweisen. Dies ermöglicht genaue Bestimmungen der Planlage, da ausreichend viel diffus gestreutes Licht auf die optischen Flächensensoren fallen kann. Entsprechend kurze Belichtungszeiten vermindern das Risiko, dass die projizierten Laserlinien im Bild der Flächensensoren aufgrund einer Bewegung der Materialbahn verschwimmen und somit die Bestimmung der Planlage gestört wird.

Weiterhin kann zumindest eine Linienlaserquelle und/oder zumindest eine Positionslaserquelle eine gepulste Laserquelle sein. Beispielsweise kann die Leistung der Laserquellen aus Gründen des Augenschutzes auf Laserklasse 2 beschränkt sein. Durch den Einsatz gepulster Laserquellen lässt sich eine höhere (z. B. die doppelte) Lichtleistung bei gleichbleibender Laserklasse gegenüber einer dauerhaft leuchtenden Laserquelle nutzen. Wird entsprechend die Erfassung von Bilddaten auf den Zeitraum beschränkt, in welchem die gepulsten Laserquelle(n) Laser emittieren, kann eine hohe Lichtintensität erzielt und mithin eine verkürzte Belichtungszeit realisiert werden. Grundsätzlich gilt, dass eine Verdopplung der Lichtleistung etwa eine Halbierung der Belichtungszeit erlaubt. Somit kann das Risiko, dass die projizierten Laserlinien im Bild der Flächensensoren aufgrund einer Bewegung der Materialbahn verschwimmen weiter reduziert werden.

Weiterhin kann die Steuereinheit dazu eingerichtet sein, eine Abweichung der Materialbahn von einer Soll-Planlage, insbesondere von einem Soll-Höhenprofil zu ermitteln. Basierend auf dieser ermittelten Abweichung kann optional ein Temperierungssystem einer Anlage zur Herstellung einer Materialbahn gesteuert oder geregelt werden. Die Steuerung kann manuell oder automatisiert erfolgen.

Es hat sich beispielsweise gezeigt, dass bei der Herstellung von Kunststofffolien die Temperaturführung in einer Kühlzone einer Querreckanlage maßgeblichen Einfluss auf die Dehnung bzw. das Schrumpfungsverhalten der Kunststofffolie hat. Basierend auf der ermittelten Abweichung kann die Temperaturführung in der Kühlzone der Querreckanlage gesteuert bzw. geregelt werden. Dies kann beispielsweise über die Steuerung eines Kühlluftstroms erreicht werden. Hierzu können beispielsweise verstellbare Blenden in der Luftführung in der Kühlzone der TDO vorgesehen sein, die je nach Abweichung verstellt werden können. Ebenso kann die Temperatur des Kühlluftstroms angepasst werden.

Bei Längsreckanlagen und/oder Casting-Units kann beispielsweise eine Walzenstellung und/oder eine Walzentemperatur angepasst, oder entsprechend ein gesteuerter/geregelter Kühlluftstrom vorgesehen werden, um die Planlage der Kunststofffolie zu verbessern.

Weiterhin wird die Aufgabe durch eine Anlage zur Herstellung einer Materialbahn, insbesondere einer Kunststofffolie gelöst. Die erfindungsgemäße Anlage umfasst zumindest ein System zur Inline-Bestimmung der Planlage der Materialbahn, wie dieses vorstehend beschrieben ist. Zudem umfasst die Anlage zumindest eine der folgenden Komponenten: eine Extrusionsanlage, eine Casting-Unit, eine Längsreckanlage, eine Querreckanlage, eine Simultanreckanlage und/oder eine Wickelvorrichtung.

Um die Planlage der Materialbahn A, bzw. der Kunststofffolie zu bestimmen, kann an zumindest einer Stelle der Anlage ein System zur Inline-Bestimmung der Planlage der Materialbahn vorgesehen sein. Es ist auch möglich mehrere Systeme zur Inline-Bestimmung der Planlage an unterschiedlichen Stellen der Anlage vorzusehen. Mögliche Stellen sind z. B. nach der Casting Unit, in bzw. nach der Längsreckanlage, nach der Querreckanlage und insbesondere in einer Folienabzugeinrichtung und/oder vor bzw. in einer Wickelvorrichtung.

Auch ein Verfahren zur Inline-Bestimmung der Planlage einer Materialbahn, insbesondere einer Kunststofffolie, mittels des zuvor beschriebenen Systems löst die Aufgabe. Das Verfahren umfasst zumindest die folgenden Schritte
- Projizieren von Laserlinien mittels der Linienlaserquellen auf eine bewegte Materialbahn;
- Erfassen von Bilddaten von zumindest einer projizierten Laserlinie mittels eines optischen Flächensensors;
- Verarbeiten der Bilddaten, und
- basierend auf den verarbeiteten Bilddaten, Bestimmen einer Planlage, insbesondere eines Höhenprofils der Materialbahn.

Beim Verarbeiten der Bilddaten lässt sich insbesondere durch das Zusammenfassen von benachbarten Pixeln eines optischen Flächensensors (sog. Binning) die Lichtempfindlichkeit des optischen Flächensensors erhöhen. Somit kann das Messergebnis verbessert werden.

Die Messfrequenz, mit welcher die Bilddaten erfasst werden kann beispielsweise 2 Hz bis 50 Hz, insbesondere 5 Hz bis 30 Hz betragen.

Das Verfahren umfasst weiterhin optional das Anzeigen der bestimmten Planlage auf einer Anzeigevorrichtung, beispielsweise einem Display. Basierend auf der Anzeige können dann Prozessparameter manuell angepasst werden.

Ebenso kann das Verfahren das Ermitteln einer Abweichung von einer Soll-Planlage, insbesondere von einem Soll-Höhenprofil, umfassen und optional basierend auf der ermittelten Abweichung das Steuern und/oder Regeln eines Temperierungssystems einer Anlage zur Herstellung einer Materialbahn, um die Planlage zu verbessern.

Weiterhin kann das Verfahren das Bestimmen zumindest eines Kennwerts für die Güte der bestimmten Planlage umfassen. Beispiele für entsprechende Güte-Kennwerte sind die mittlere Folienhöhe, die Standardabweichung des Höhenprofils zu einer Regressionsgeraden, oder ähnliches. Insbesondere können die Kennwerte über ein Zeitintervall gemittelt werden.

### Kurze Beschreibung der Figuren

Die Erfindung wird nachfolgend anhand der beigefügten Figuren beispielhaft näher erläutert. Dabei zeigt
- Figur 1: eine schematische Darstellung einer Anlage zur Herstellung einer Materialbahn, insbesondere einer Kunststofffolie;
- Figur 2: eine schematische Darstellung einer Materialbahn mit einem exemplarischen Planlagendefekt;
- Figur 3A: eine schematische Vorderansicht eines Systems zur Bestimmung der Planlage einer Materialbahn;
- Figur 3B: eine schematische Draufsicht auf eine Materialbahn, deren Planlage bestimmt wird;
- Figur 4A: eine schematische Seitenansicht eines Systems zur Bestimmung der Planlage einer Materialbahn;
- Figur 4B: eine schematische Seitenansicht eines weiteren Systems zur Bestimmung der Planlage einer Materialbahn;
- Figur 4C: eine schematische Seitenansicht eines weiteren Systems zur Bestimmung der Planlage einer Materialbahn;
- Figur 5: einen schematischen Graph eines einhüllenden Höhenprofils einer Materialbahn;
- Figur 6: eine weitere Darstellung eines Systems zur Bestimmung der Planlage einer Materialbahn, und
- Figur 7: ein schematisches Ablaufdiagramm eines erfindungsgemäßen Verfahrens.

### Beschreibung der Figuren

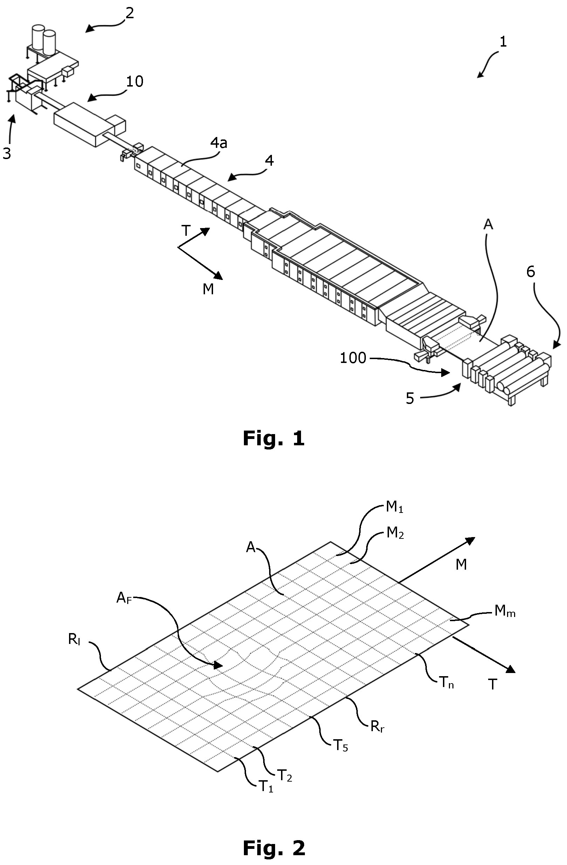

In Figur 1 ist äußerst schematisch eine Anlage 1 zur Herstellung einer Materialbahn dargestellt, die mehrere verschiedene Anlagen und Vorrichtungen umfasst. Insbesondere ist die Anlage 1 zur Herstellung einer Kunststofffolie A (z. B. eine Verpackungsfolie) eingerichtet.

Im gezeigten Beispiel weist die Anlage 1 eine Extrusionsanlage 2, eine Casting-Unit 3, zumindest eine Längsreckanlage 10 (MDO, "Machine Direction Orienter"), eine Querreckanlage 4 (TDO, "Transverse Direction Orienter"), eine Behandlungseinrichtung 5 sowie eine Wickelvorrichtung 6 auf.

Die Extrusionsanlage 2 weist einen Extruder auf und ist dazu eingerichtet, aus wenigstens einem Ausgangsprodukt (z. B. Kunststoffgranulat und/oder -recyclat) eine Schmelze zu erzeugen. Ebenso kann die Schmelze direkt bei der Polymerisation von Monomeren erzeugt werden. Die erzeugte Schmelze wird auf eine Kühlwalze der Casting-Unit 3 aufgetragen, wodurch eine Kunststofffolie A erzeugt wird. Diese extrudierte, noch nicht verstreckte Kunststofffolie wird auch als Castfilm bezeichnet und kann eine Dicke im Bereich von 50 µm bis 3200 µm, insbesondere im Bereich von 100 µm bis 500 µm aufweisen. Bereits in diesem Bereich können Planlagendefekte auftreten und mit dem nachstehend beschriebenen System zur Bestimmung der Planlage erkannt werden.

Die erzeugte Kunststofffolie A kann eine oder mehrere Lagen aufweisen. Denkbar ist bei einer mehrlagigen Kunststofffolie, dass ein Extruder mehrere oder alle Lagen erzeugt, oder dass für jede Lage ein Extruder vorgesehen ist. Beispielsweise ist der Extruder oder sind die Extruder ein Einschneckenextruder, Kaskadenextruder und/oder Doppelschneckenextruder. Denkbar ist auch, dass andere Misch- und Aufbereitungsaggregate, wie ein Buskneter oder ein Planetwalzenextruder verwendet werden. Die in der Casting-Unit 3 enthaltene Kühlwalze ist temperiert.

Der erzeugte Castfilm durchläuft anschließend eine Längsreckanlage 10. Diese Längsreckanlage 10 ist grundsätzlich dazu eingerichtet, den Castfilm in Längsrichtung M zu verstrecken. Hierzu sind typischerweise Reckwalzen (nicht dargestellt) vorgesehen, die zwischen sich zumindest einen Reckspalt bilden. Um den Castfilm in Längsrichtung M zu verstrecken, rotieren die Reckwalzen mit unterschiedlicher Rotationsgeschwindigkeit. Über den Geschwindigkeitsunterschied kann der Grad der Verstreckung im Reckspalt eingestellt werden. Auch in der Längsreckanlage können Planlagendefekte auftreten und mit dem nachstehend beschriebenen System zur Bestimmung der Planlage erkannt werden.

Die in Längsrichtung verstreckte Kunststofffolie kann anschließend einer Querreckanlage 4 zugeführt werden. Die Querreckanlage 4, wie sie beispielsweise in der DE 10 2021 128 332 A1 beschrieben ist, hat entlang der üblichen Bewegungs- bzw. Abzugsrichtung der Anlage 1 einen Ofen 4a mit verschiedenen Zonen zur Temperierung der Kunststofffolie A.

Die Querreckanlage 4 hat ein Antriebssystem für die Kunststofffolie A mit zwei Transportschienen, um die Kunststofffolie durch die verschiedenen Zonen zu fördern. An jeder der Transportschienen sind in an sich bekannter Weise eine Vielzahl von Kluppeneinheiten geführt. Die Kluppeneinheiten können die Kunststofffolie A greifen und durch einen geeigneten Antrieb entlang der Transportschiene bewegt werden, sodass die Kunststofffolie A durch die Querreckanlage 4 gefördert wird.

In der ersten Zone, auch Vorheizzone genannt, wird die Kunststofffolie A erwärmt. In der anschließenden zweiten Zone ("Reckzone") wird die Kunststofffolie in Querrichtung T verstreckt, sodass sie zum Ende der zweiten Zone eine größere Breite und geringere Dicke aufweist als zu Beginn der Querverstreckung. Die Querverstreckung erfolgt dadurch, dass der Abstand der Schienen des Antriebssystems in der Reckzone vergrößert wird.

Auch beim Querverstrecken können Planlagendefekte auftreten und mit dem nachstehend beschriebenen System zur Bestimmung der Planlage erkannt werden.

Eine weitere Zone wird Neutralzone genannt und dient zur Trennung von Zonen. Die Neutralzone ist beispielsweise ein leerer Raum ohne Belüftung. Die Neutralzone kann sich zwischen den jeweiligen vorher beschriebenen Zonen befinden. Insbesondere kann sich eine Neutralzone auch zwischen einer Annealingzone und einer Kühlzone befinden. Eine solche Querreckanlage 4 ist beispielsweise aus der WO 2014/094803 A1 bekannt.

In der dritten und weiteren Zonen ("Wärmebehandlungszone", "Weiterheizzone" und/oder "Annealingzone" genannt) kann beispielsweise eine Relaxierung der Kunststofffolie bei hohen Temperaturen erfolgen. In der letzten Zone ("Kühlzone") wird die Kunststofffolie abgekühlt.

Die Zonen der Querreckanlagen 4 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Die Behandlungsvorrichtung 5 ist beispielsweise eine Vorrichtung zur Aktivierung der Oberfläche der Kunststofffolie A durch eine Coronabehandlung, beispielsweise um eine bessere Bedruckbarkeit oder Metallanhaftung zu realisieren. Die Coronabehandlung kann einseitig oder beidseitig erfolgen.

Die Wickelvorrichtung 6 dient zum Aufwickeln der erzeugten Kunststofffolie A und ist die in Abzugsrichtung letzte Vorrichtung. Sie weist eine Wickelhülse auf, auf der die Kunststofffolie A aufgewickelt wird.

Anstelle einer sequentiellen Verstreckung der Kunststofffolie in Längs- und Querrichtung, kann die Verstreckung in Längs- und Querrichtung auch simultan erfolgen (Simultanverstreckung). Eine solche Anlage zur simultanen Verstreckung (Simultanreckanlage) ist beispielsweise aus WO2015/007367A1 bekannt. Zudem ist es möglich auch monoaxial verstreckte Folien herzustellen, d.h. Folien, die nur in Längs- bzw. Querrichtung verstreckt sind.

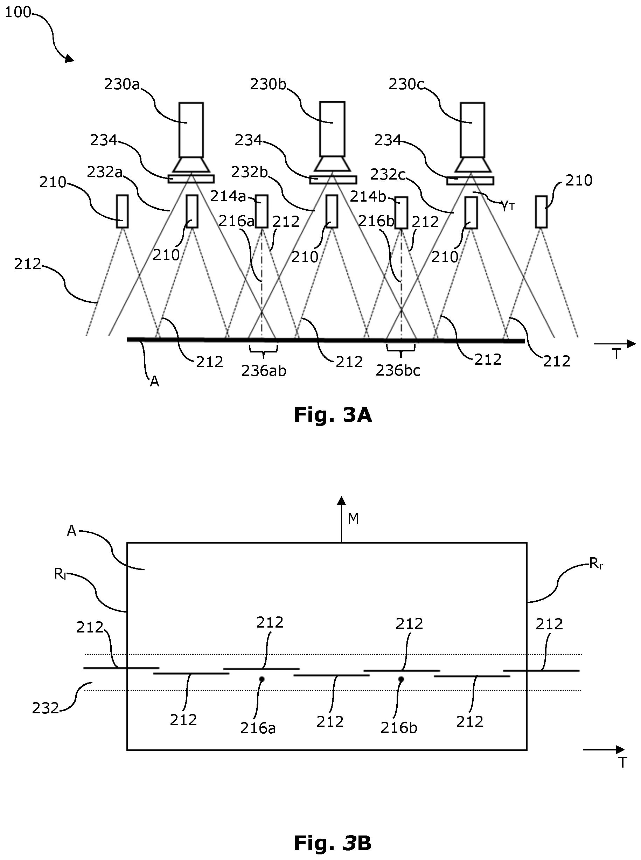

Um die Planlage der Materialbahn A, bzw. der Kunststofffolie zu bestimmen, kann an zumindest einer Stelle der Anlage 1 ein System zur Inline-Bestimmung der Planlage der Materialbahn, wie dieses beispielsweise mit Bezug auf die Figuren 3A-4C und 6 beschrieben ist, vorgesehen sein. Das System kann über und/oder unter der Materialbahn angeordnet sein.

Es ist auch möglich mehrere Systeme zur Inline-Bestimmung der Planlage an unterschiedlichen Stellen der Anlage 1 vorzusehen. Mögliche Stellen sind z. B. nach der Casting Unit 3, in bzw. nach der Längsreckanlage 10, in bzw. nach dem Ofen 4a, in bzw. nach der Querreckanlage 4 und insbesondere in bzw. nach einer Folienabzugeinrichtung (engl. Pull Roll Stand) und/oder vor bzw. in einer Wickelvorrichtung 6.

Mittels dem erfindungsgemäßen System zur Bestimmung der Planlage kann die Planlage der Materialbahn (hier eine Kunststofffolie A) Inline, also bereits bei der Herstellung der Materialbahn, bestimmt werden. Dies ermöglicht eine schnelle, vorzugsweise automatisierte, Anpassung von Prozessparametern, um die Planlage der Materialbahn zu verbessern.

Figur 2 zeigt eine schematische Darstellung einer Materialbahn A mit einem exemplarischen Planlagendefekt A_{F}. Dieser zeichnet sich durch ein lokales Durchhängen der Materialbahn A aus. Die hier gezeigte Materialbahn A ist beispielsweise an ihren Rändern RI, Rr geringfügig auf Zug belastet, wie dies beispielsweise durch das Greifen der Ränder mittels Kluppeneinheiten am Ende einer Querreckanlage der Fall ist. Das lokale, konkave Durchhängen der Materialbahn A resultiert aus dem lokalen Vorhandensein von zu viel flächigem Material in beiden Richtungen T (Querrichtung) und M (Längsrichtung) und führt zu unterschiedlichen Längen M₁, ... Mₘ, gemessen an unterschiedlichen Querpositionen in Querrichtung T der Materialbahn A. Des Weiteren führt dies zu unterschiedlichen Breiten T₁, ... Tₙ der Materialbahn in Querrichtung T, gemessen an unterschiedlichen Längspositionen in Längs- bzw. Abzugsrichtung M der Materialbahn A. Diese Längen- und Breitenunterschiede können beim Auf- und Abwickeln der Materialbahn zu Ungleichmäßigkeiten führen.

Figur 3A zeigt eine schematische Vorderansicht eines Systems 100 zur Bestimmung der Planlage einer Materialbahn, beispielsweise einer Kunststofffolie. In der gezeigten Darstellung ist die Materialbahn A in einer Schnittansicht dargestellt. Die Längsrichtung bzw. Abzugsrichtung ist beispielsweise in die Bildebene orientiert.

Das System 100 umfasst eine Vielzahl von Linienlaserquellen 210 (hier beispielsweise 7 Stück) und eine Vielzahl von optischen Flächensensoren 230a, 230b, 230c (hier beispielsweise 3 Stück). Je nach Breite der Materialbahn A können weitere Linienlaserquellen 210 bzw. optischen Flächensensoren 230 vorgesehen sein. Beispielsweise kann das System zumindest 30, oder zumindest 40, oder zumindest 50 optischen Flächensensoren und eine entsprechende Anzahl an Linienlaserquellen 210 umfassen. Insbesondere kann jedem optischen Flächensensor 230 zumindest eine, oder zumindest zwei, oder zumindest drei Linienlaserquellen zugeordnet sein.

Ebenso ist es möglich, dass eine Linienlaserquelle 210 mehreren (zumindest zwei) Flächensensoren 230a, 230b, 230c zugeordnet ist. Den mehreren Flächensensoren kann also zumindest eine (gemeinsame) Linienlaserquelle zugeordnet sein. Mithin kann eine Linienlaserquelle 230 dazu eingerichtet sein, mehrere Laserlinien 212 auf die Materialbahn A zu projizieren, die von unterschiedlichen Flächensensoren 230a, 230b, 230c erfasst werden.

In der Darstellung der Fig. 3A sind jedem optischen Flächensensor zumindest zwei Linienlaserquellen 210 zugeordnet. Weiterhin sind zwei Positionslaserquellen 214a, 214b vorgesehen. Die Positionslaserquellen 214a, 214b projizieren eine Positionsmarkierung 216a, 216b und optional eine Laserlinie 212 auf die Materialbahn.

Weiterhin kann jedem optischen Flächensensor 230 einen Bandpassfilter 234 zugeordnet sein. Der Bandpassfilter 234 ist dazu eingerichtet, ausschließlich Licht zu dem optischen Flächensensor 230 passieren zu lassen, welches von den Linienlaserquellen 210 und/oder der zumindest einen Positionslaserquelle 214a, 214b emittiert wurde.

Ein exemplarisches Projektionsmuster, umfassend Laserlinien 212 und Positionsmarkierung 216a, 216b ist in Figur 3B gezeigt. Das Projektionsmuster liegt in einem Bilderfassungsbereich 232 der sich aus Bilderfassungsbereichen 232a, 232b, 232c der einzelnen optischen Flächensensoren 230a, 230b, 230c zusammensetzt. Die Breite (in T-Richtung) der Bilderfassungsbereiche 230a, 230b, 230c wird u.a. durch den Öffnungswinkel γ_{T} der optischen Flächensensoren und den Abstand der optischen Flächensensoren zur Materialbahn bestimmt. Der Öffnungswinkel γ_{T} liegt beispielsweise im Bereich von ±45°, oder im Bereich von ±30°, oder im Bereich von ±20°. Der Abstand kann beispielsweise zumindest 30 cm, oder zumindest 50 cm oder zumindest 70 cm betragen, sodass der Bilderfassungsbereich 232a, 232b, 232c eines optischen Flächensensors 230a, 230b, 230c beispielsweise eine Breite von 25 cm bis 100 cm, oder eine breite von 30 cm bis 50 cm aufweist.

Die Bilderfassungsbereiche 230a, 230b, 230c erstrecken sich beispielsweise über die gesamte Breite der Materialbahn A und darüber hinaus. Insbesondere die jeweils äußersten Flächensensoren können so orientiert sein, dass deren Bilderfassungsbereich 230a bzw. 230c über den Rand Rₗ bzw. den Rand Rᵣ der Materialbahn A hinausgeht. Auch die Linienlaserquellen 210 können so orientiert sein, dass zumindest eine Laserlinie 212 den linken Rand Rₗ bzw. den rechten Rand Rᵣ der Materialbahn A schneidet. Somit können Schwankungen in der Folienbreite detektiert werden.

Die Linienlaserquellen 210 und die Positionslaserquellen 214a, 214b sind beispielsweise so angeordnet, dass sich die projizierten Laserlinien 212 in Querrichtung T der Materialbahn A zumindest teilweise überlappen und die gesamte Breite der Materialbahn überspannen, wobei einzelne Laserlinien nur einen Abschnitt der Materialbahn A in Querrichtung T erfassen. Somit kann eine lückenlose Bestimmung der Planlage in Querrichtung T, vom linken Rand Rᵢ bis zum rechten Rand Rᵣ der Materialbahn A erfolgen. Zudem sind die Linienlaserquellen so angeordnet, dass benachbarte Laserlinien 212 in Längsrichtung M versetzt zueinander projiziert werden, sodass sie sich nicht überlagern.

Die Positionslaserquellen 214a, 214b projizieren die Positionsmarkierungen jeweils in einen Schnittbereich 236ab, 236bc von Bilderfassungsbereichen 232a, 232b bzw. 232b, 232c benachbarter optischer Flächensensoren 232a, 232b, 232c. Die Positionsmarkierung ist hier als Laserpunkt dargestellt, kann aber auch beispielsweise als Laserkreuz, als eine in Längsrichtung orientierte Laserlinie, oder dergleichen gestaltet sein. Diese Positionsmarkierungen ermöglichen es erfassten Bilddaten unterschiedlicher optischen Flächensensoren 232a, 232b, 232c in Deckung zu bringen und so eine kalibrierte Planlage zu bestimmen.

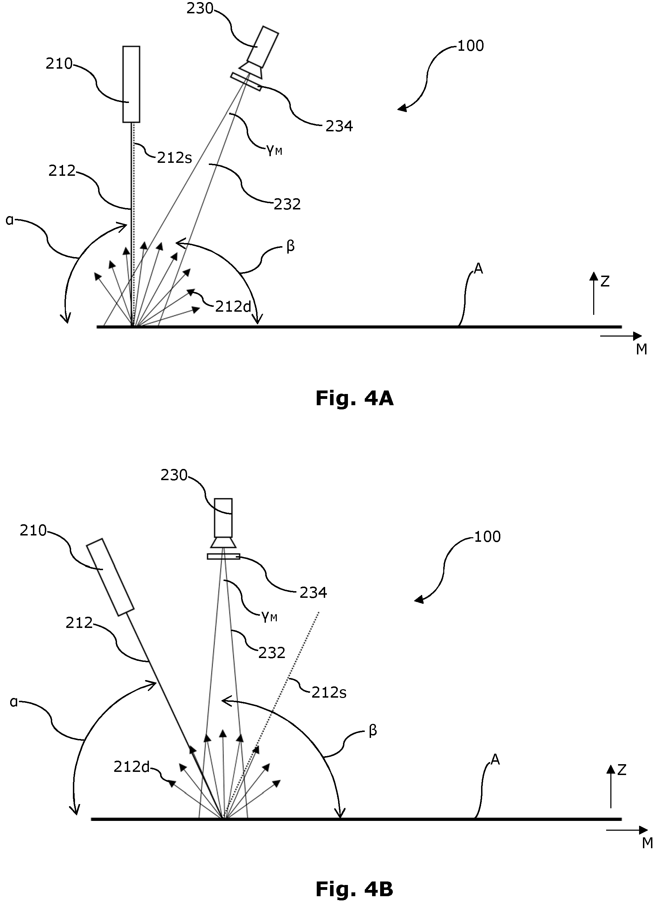

Die optischen Flächensensoren 230a, 230b, 230c sind so zu den Laserquellen 210, 214 ausgerichtet, dass sie Bilddaten zumindest einer projizierten Laserlinie 212 einer ihnen zugeordneten Linienlaserquelle 210 erfassen. Eine nicht gezeigte Steuereinheit ist dazu eingerichtet, basierend auf den erfassten Bilddaten die Planlage der Materialbahn A zu bestimmen. Dies wird mit Bezug auf die Figuren 4A-4C näher erläutert.

Das System zur Inline-Bestimmung der Planlage ist insbesondere für die Bestimmung der Planlage von Kunststofffolien in Anlagen zur Herstellung von Kunststofffolien, wie Folienreckanlagen geeignet.

Die Figuren 4A bis 4C zeigen jeweils schematische Seitenansichten eines Systems zur Bestimmung der Planlage einer Materialbahn. Die Materialbahn ist auch hier geschnitten dargestellt. Die Längsrichtung bzw. Abzugsrichtung M ist in diesen Darstellungen nach rechts orientiert.

Die gezeigten Systeme unterscheiden sich in der Anordnung der Linienlaserquellen 210 und der optischen Flächensensoren 230 zueinander. Insbesondere sind die optischen Flächensensoren 230 und die Linienlaserquellen 210 (bzw. Positionslaserquelle(n)) so zueinander ausgerichtet, dass die gerichtete Reflexion 212s der Laserstrahlen nicht auf die optischen Flächensensoren 230 fällt. Stattdessen erfassen die optischen Flächensensoren 230 die diffuse Streuung 212d der emittierten Laserstrahlen. Beispielsweise können die optischen Flächensensoren 230 und die Linienlaserquellen 210 so auf die Materialbahn A gerichtet sein, dass die Blickrichtung und die Projektionsrichtung einen Winkel einschließen, der im Bereich von 10° bis 70°, oder im Bereich von 15° bis 45° oder im Bereich von 20° bis 35° liegt.

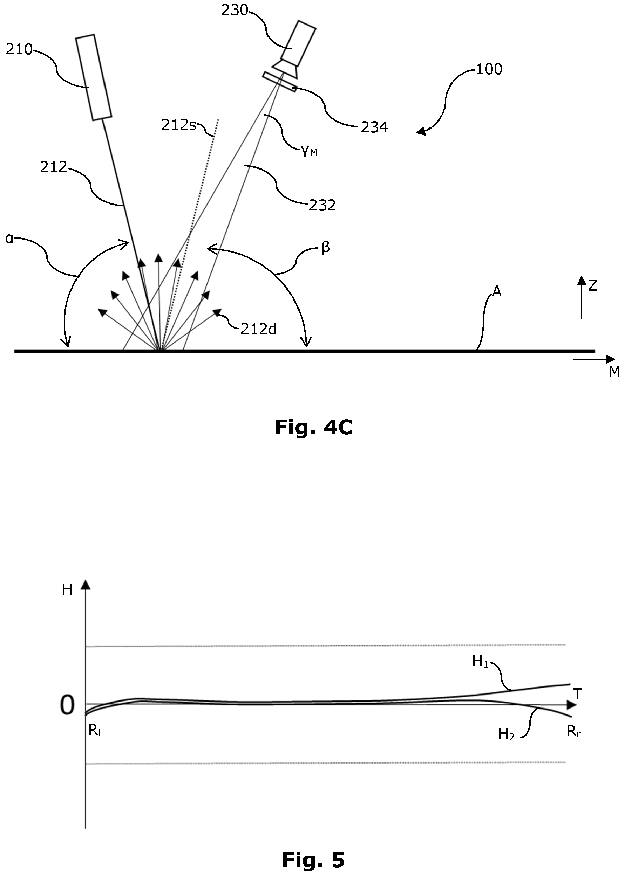

Wie Figur 4A zeigt, können die Linienlaserquellen 210 (bzw. Positionslaserquelle(n)) im Wesentlichen lotrecht auf die Materialbahn A projizieren, während die optischen Flächensensoren 230 einen geneigten Blickwinkel aufweisen. Ebenso ist es möglich, wie Figur 4B zeigt, dass die optischen Flächensensoren 230 im Wesentlichen lotrecht auf die Materialbahn gerichtet sind und die Linienlaserquellen 210 (bzw. Positionslaserquelle(n)) unter einem geneigten Einfallswinkel α projizieren. Ebenfalls ist es möglich, wie Figur 4C zeigt, dass weder die Linienlaserquellen 210 (bzw. Positionslaserquelle(n)) noch die optischen Flächensensoren 230 im Wesentlichen lotrecht auf die Materialbahn gerichtet, sondern geneigt sind.

Die Materialbahn kann zudem im Wesentlichen horizontal geführt sein. Die Erfindung ist hierauf jedoch nicht beschränkt. Das System erlaubt auch die Bestimmung der Planlage bei im Wesentlichen vertikal oder unter einem Winkel geführten Materialbahnen.

Wie die Figuren 4A-4C zeigen, können die optischen Flächensensoren 230 unter einem Blickwinkel β auf die Materialbahn A gerichtet sein, wobei der Blickwinkel β in einem Bereich von ±45° zu einer Normalen auf die Materialbahn A, oder in einem Bereich von ±30°, oder in einem Bereich von ±15° liegt kann. Wie hier dargestellt ist der Blickwinkel β insbesondere in der Längsrichtung M der Materialbahn A geneigt. Es versteht sich, dass die optischen Flächensensoren 230 auch so orientiert sein können, dass der Blickwinkel β entgegen der Längsrichtung M der Materialbahn A geneigt ist. Ebenso ist es möglich, die optischen Flächensensoren 230 im Wesentlichen lotrecht zur Materialbahn A auszurichten (sofern die Linienlaserquellen 210 entsprechend geneigt sind).

Die Linienlaserquellen 210 sind in den Figuren 4A-4C so auf die Materialbahn gerichtet, dass ein entsprechender Laserstrahl unter einem Einfallswinkel α auf die Materialbahn trifft. Der Einfallswinkel α ist dabei beispielsweise in einem Bereich von ±15° zu einer Normalen auf die Materialbahn, oder in einem Bereich von ±10°, oder in einem Bereich von ±5°, wobei der Einfallswinkel α insbesondere entgegen einer Längsrichtung der Materialbahn A geneigt ist. Es versteht sich, dass die Linienlaserquellen 210 auch so orientiert sein können, dass der Einfallswinkel α in Längsrichtung M der Materialbahn A geneigt ist. Ebenso ist es möglich, die optischen Flächensensoren 230 im Wesentlichen lotrecht zur Materialbahn A auszurichten (sofern die Flächensensoren 230 entsprechend geneigt sind).

Weiterhin können die optischen Flächensensoren 230 einen Öffnungswinkel γ_{M} in Längsrichtung M der Materialbahn aufweisen, der im Bereich von ±10°, oder im Bereich von ±5°, oder im Bereich von ±3° liegt. Der Öffnungswinkel γ_{M} bestimmt die Ausdehnung des Bilderfassungsbereichs 232 in der Längsrichtung M.

Beispielsweise werden die Laserlinien 212 in der Mitte des Bilderfassungsbereichs 232 projiziert, wenn sich die Materialbahn A in der idealen Planlage befindet und entsprechend an keiner Stelle in Höhenrichtung Z ausgelenkt ist. Bei einem auftretenden Planlagendefekt, beispielsweise einem lokalen Durchhängen der Materialbahn (s. Fig. 2) werden die projizierten Laserlinien 212 im Bilderfassungsbereich 232 verschoben. In den Figuren 4A-4C nach links oder rechts. Diese Verschiebung wird von den optischen Flächensensoren bzw. in den Bilddaten erfasst. Basierend auf den erfassten Bilddaten kann die aktuelle Planlage der Materialbahn ermittelt werden.

Das erfindungsgemäße System erlaubt eine hohe Messauflösung in Querrichtung der Materialbahn. So kann jeder optische Flächensensor 230 eine Reihe von Pixelspalten aufweisen, wobei jede Pixelspalte einen Messwert für die Position der projizierten Laserlinie darstellt. Insbesondere kann eine Messauflösung in Querrichtung von < 2 mm, oder von < 1 mm, oder von < 0.5 mm erreicht werden. Die Höhenauflösung (Z-Richtung) kann beispielsweise < 0,2 mm, oder < 0,1 mm, oder < 0,05 mm sein.

Wird die Materialbahn A in Längsrichtung M bewegt, kann die Planlage an unterschiedlichen Längspositionen in Längsrichtung M der Materialbahn bestimmt werden. Dies erlaubt es die Planlage der gesamten Materialbahn zu bestimmen.

Figur 5 zeigt einen schematischen Graphen eines einhüllenden Höhenprofils H einer Materialbahn. In der 0-Lage ist die ideale Planlage der Materialbahn. Die Einhüllenden H1, H2 zeigen maximale Planlagenabweichungen in Höhenrichtung über einen definierten Messzeitraum. So ist erkennbar, dass die Materialbahn am linken Rand Rᵢ stets herunterhängt und sich dabei kaum bewegt. Dagegen schwingt die Materialbahn am rechten Rand Rᵣ rechts beträchtlich, während in der Mitte geringere Bewegungen vorherrschen.

Diese grafische Visualisierung der Planlage gibt einen schnellen Aufschluss über die Güte der Planlage. Mithilfe dieses erfindungsgemäßen Systems wird es ermöglicht, die Planlage der Materialbahn, z. B. bei Folienreckanlagen, durch Anpassung von Prozessparametern in Echtzeit zu optimieren.

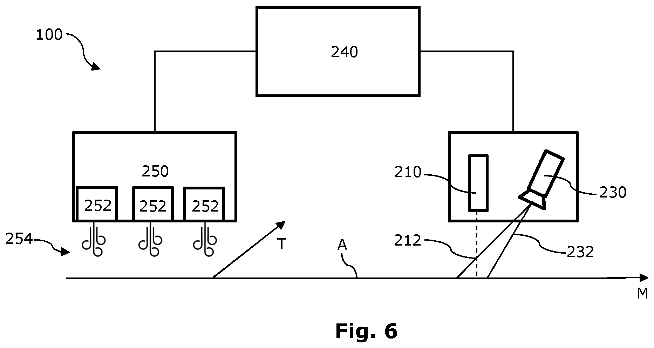

Figur 6 zeigt eine weitere Darstellung eines Systems zur Bestimmung der Planlage einer Materialbahn A. In Längsrichtung M der Materialbahn sind Linienlaserquellen 210 und optische Flächensensoren 232 in zuvor beschriebener Weise angebracht um die Planlage der Materialbahn A zu Bestimmen. Dies kann basierend auf den erfassten Bilddaten in der Steuereinheit 240 erfolgen. Die Steuereinheit 240 ist weiterhin mit einem Temperierungssystem 250 einer Anlage zur Herstellung einer Materialbahn A gekoppelt und kann dieses steuern und/oder regeln.

Insbesondere kann die Steuereinheit 240 dazu eingerichtet sein, eine Abweichung der Materialbahn A von einer Soll-Planlage, insbesondere von einem Soll-Höhenprofil zu ermitteln. Basierend auf dieser ermittelten Abweichung kann dann das Temperierungssystem 250 gesteuert oder geregelt werden.

Beispielsweise kann eine Temperaturführung in einer Kühlzone einer Querreckanlage gesteuert bzw. geregelt werden. Dies kann beispielsweise über die Steuerung eines Kühlluftstroms 254 erreicht werden. Hierzu können beispielsweise verstellbare Blenden in der Luftführung vorgesehen sein, die je nach Abweichung verstellt werden können. Ebenso kann die Temperatur des Kühlluftstroms 254 angepasst werden. Somit ist es möglich die Materialbahn an unterschiedlichen Breitenabschnitten unterschiedlich zu kühlen bzw. zu temperieren und so auf Planlagendefekte zu reagieren.

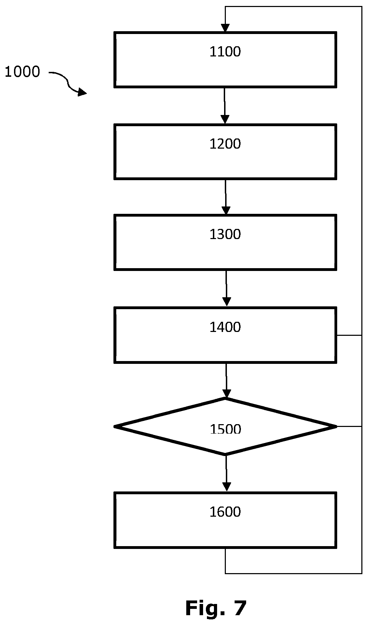

Figur 7 zeigt ein schematisches Ablaufdiagramm eines erfindungsgemäßen Verfahrens 1000 zum Verstrecken einer Kunststofffolie A in Längsrichtung M. Das Verfahren 1000 umfasst zumindest die folgenden Schritte
- Projizieren 1100 von Laserlinien 212 mittels der Linienlaserquellen 210, 214a, 214b auf eine bewegte Materialbahn A;
- Erfassen 1200 von Bilddaten von zumindest einer projizierten Laserlinie mittels eines optischen Flächensensors 230;
- Verarbeiten 1300 der Bilddaten, um beispielsweise Bilddaten benachbarter optischen Flächensensoren 230 in Deckung zu bringen, und
- basierend auf den verarbeiteten Bilddaten, Bestimmen einer Planlage, insbesondere eines Höhenprofils der Materialbahn A.

Insbesondere kann zunächst für jedes Sensorbild die vertikale Position der Materialbahn A entlang der Laserlinien 212, vorzugsweise subpixelgenau, extrahiert werden. Ebenso erfolgt die Identifikation der horizontalen Position der Positionsmarkierungen 236a, 236b. Da die Auflösung eines Pixels quer zur Materialbahn (T-Richtung) u. a. auch vom Folienabstand abhängt, kann nun eine Umrechnung der erfassten Laserlinien für ein definiertes Raster erfolgen. Anschließend kann für jede extrahierte Laserlinie die vertikale Position im Sensorbild in die dazu korrelierende Höhenposition der Materialbahn transformiert werden. Dies kann z. B. auf einer Höhenkalibrierung basieren.

Optional werden die Ränder der Höhenprofile in jedem Sensorbild bis zu den detektierten Positionsmarkierungen gekürzt, um Überlappungen zu vermeiden und die einzelnen Sensorbilder bzw. Bilddaten in Deckung zu bringen. In einem weiteren Schritt können die Höhenprofile der einzelnen optischen Flächensensoren zum gesamten Höhenprofil bzw. zur Gesamtplanlage zusammengefasst werden.

Diese Schritte können beispielsweise mit einer Messfrequenz von 2 Hz bis 50 Hz, insbesondre 5 Hz bis 30 Hz wiederholt werden.

Das Verfahren umfasst weiterhin optional das Anzeigen der bestimmten Planlage auf einer Anzeigevorrichtung, beispielsweise einem Display. Die Anzeige kann dabei beispielsweise wie in Figur 5 dargestellt grafisch visualisiert erfolgen. Basierend auf der Anzeige können dann Prozessparameter (z. B. die Temperierung der Materialbahn, die Materialbahnspannung, und/oder dergleichen) manuell angepasst werden.

Neben der grafischen Visualisierung können auch Kennwerte für die Güte der Planlage bestimmt und mittels der Anzeigevorrichtung angezeigt werden. Beispiele für entsprechende Güte-Kennwerte sind die mittlere Folienhöhe, die Standardabweichung des Höhenprofils zu einer Regressionsgeraden, etc. Insbesondere können die Kennwerte über ein Zeitintervall gemittelt sein.

Ebenso kann das Verfahren das Ermitteln einer Abweichung von einer Soll-Planlage, insbesondere von einem Soll-Höhenprofil, umfassen und optional basierend auf der ermittelten Abweichung das Steuern und/oder Regeln eines Temperierungssystems einer Anlage zur Herstellung einer Materialbahn, um die Planlage zu verbessern.

### Bezugszeichenliste

- 1: Anlage zur Herstellung einer Materialbahn
- 2: Extrusionsanlage
- 3: Casting-Unit
- 4: Querreckanlage
- 4a: Ofen
- 5: Behandlungseinrichtung
- 6: Wickelvorrichtung
- 10: Längsreckanlage
- 100: System zur Bestimmung der Planlage einer Materialbahn
- 210: Linienlaserquelle
- 212: Laserstrahl (Linie)
- 212d: diffuse Streuung
- 212s: gerichtete Streuung
- 214a: Positionslaserquelle
- 214b: Positionslaserquelle
- 216a: Positionsmarkierung
- 216b: Positionsmarkierung
- 230: optischer Flächensensor
- 230a: optischer Flächensensor
- 230b: optischer Flächensensor
- 230c: optischer Flächensensor
- 232: Bilderfassungsbereich
- 232a: Bilderfassungsbereich
- 232b: Bilderfassungsbereich
- 232c: Bilderfassungsbereich
- 234: optischer Filter (Bandpass) 236abSchnittbereich
- 236bc: Schnittbereich
- 240: Steuereinheit
- 250: Temperierungssystem
- 252: Düsenkasten
- 254: (Kühl-)Luftstrom
- 1000: Verfahren
- 1100: Projizieren zumindest einer Laserlinie
- 1200: Erfassen von Bilddaten
- 1300: Verarbeitung der Bilddaten
- 1400: Bestimmung eines Höhenprofils
- 1500: Bestimmung einer Abweichung (z. B. Planlagendefekt)
- 1600: Anpassen zumindest eines Prozessparameters
- A: Materialbahn, insbesondere Kunststofffolie (z. B. BOPP-Folie)
- A_{F}: Planlagendefekt
- H: Höhenprofil
- H₁: Einhüllende
- H₂: Einhüllende
- Rᵣ: Rand der Materialbahn, insb. Folie (rechts)
- Rₗ: Rand der Materialbahn, insb. Folie (links)
- M: Längsrichtung
- T: Querrichtung
- α: Einfallswinkel Laserstrahl
- β: Blickwinkel optischer Flächensensor
- γ_{M}: Öffnungswinkel optischer Flächensensor
- γ_{T}: Öffnungswinkel optischer Flächensensor

## Patentansprüche

1. System (100) zur Bestimmung der Planlage einer Materialbahn (A), insbesondere einer Folie, wobei das System (100)
eine Steuereinheit (240) sowie eine Vielzahl von optischen Flächensensoren (230) und eine Vielzahl von Linienlaserquellen (210) umfasst, wobei
jedem optischen Flächensensor (230) zumindest eine Linienlaserquelle (210) zugeordnet ist, wobei
die Linienlaserquellen (210) dazu eingerichtet sind, je zumindest eine Laserlinie (212) auf die Materialbahn (A) zu projizieren, wobei die Laserlinien (212) im Wesentlichen in einer Querrichtung (T) der Materialbahn (A) orientiert sind und sich über zumindest eine Teilbreite der Materialbahn (A) erstrecken, wobei die
optischen Flächensensoren (230) so ausgerichtet sind, dass sie Bilddaten zumindest einer projizierten Laserlinie (212) einer ihnen zugeordneten Linienlaserquelle (210) erfassen, und wobei
die Steuereinheit (240) dazu eingerichtet ist, basierend auf den erfassten Bilddaten die Planlage der Materialbahn (A) zu bestimmen.

2. System (100) nach Anspruch 1, wobei jedem optischen Flächensensor (230) ein Bilderfassungsbereich (232) zugeordnet ist, und wobei sich die Bilderfassungsbereiche benachbarter optischer Flächensensoren (230a, 230b; 230b, 230c) in der Querrichtung (T) in zumindest einem Schnittbereich (236ab, 236bc) überschneiden.

3. System (100) nach Anspruch 1 oder 2, wobei die optischen Flächensensoren (230) unter einem Blickwinkel (β) auf Materialbahn (A) gerichtet sind, wobei der Blickwinkel (β) in einem Bereich von ±45° zu einer Normalen auf die Materialbahn (A), oder in einem Bereich von ±30°, oder in einem Bereich von ±15° liegt, wobei der Blickwinkel (β) insbesondere in oder entgegen einer Längsrichtung (M) der Materialbahn (A) geneigt ist.

4. System (100) nach einem der Ansprüche 1 bis 3, wobei
die optischen Flächensensoren (230) einen Öffnungswinkel (γ_{M}) in Längsrichtung (M) der Materialbahn (A) aufweisen, der im Bereich von ±10°, oder im Bereich von ±5°, oder im Bereich von ±3° liegt, und/oder wobei
die optischen Flächensensoren (230) einen Öffnungswinkel (γ_{T}) in Querrichtung (T) der Materialbahn (A) aufweisen, der im Bereich von ±45°, oder im Bereich von ±30°, oder im Bereich von ±20° liegt.

5. System (100) nach einem der Ansprüche 1 bis 4, wobei
die Linienlaserquellen (210) so angeordnet sind, dass sich die projizierten Laserlinien (212) in Querrichtung (T) zumindest teilweise überlappen, und wobei die Linienlaserquellen (210) optional so angeordnet sind, dass benachbarte Laserlinien (212) in Längsrichtung (M) versetzt zueinander projiziert sind, sodass sie sich nicht überlagern.

6. System (100) nach einem der Ansprüche 2 bis 5, weiterhin umfassend zumindest eine Positionslaserquelle (214a, 214b), welche dazu eingerichtet ist in einem Schnittbereich (236ab, 236bc) der Bilderfassungsbereiche eine Positionsmarkierung (216a, 216b) auf die Materialbahn (A) zu projizieren.

7. System (100) nach einem der Ansprüche 1 bis 6, wobei
die Linienlaserquellen (212) und/oder die zumindest eine Positionslaserquelle (214a, 214b) so auf die Materialbahn (A) gerichtet sind, dass ein entsprechender Laserstrahl unter einem Einfallswinkel (α) auf die Materialbahn (A) trifft, wobei der Einfallswinkel (α) in einem Bereich von ±15° zu einer Normalen auf die Materialbahn (A), oder in einem Bereich von ±10°, oder in einem Bereich von ±5° liegt, wobei der Einfallswinkel (α) insbesondere in oder entgegen einer Längsrichtung (M) der Materialbahn (A) geneigt ist.

8. System (100) nach einem der Ansprüche 1 bis 7, weiterhin umfassend
zumindest einen Bandpassfilter (234), welcher zumindest einem der optischen Flächensensoren (230) zugeordnet ist, und welcher dazu eingerichtet ist, Licht zu dem optischen Flächensensor (230) passieren zu lassen, welches von den Linienlaserquellen (212) und/oder der zumindest einen Positionslaserquelle (214a, 214b) emittiert wurde.

9. System (100) nach einem der Ansprüche 1 bis 8, wobei zumindest eine projizierte Laserlinie (212) eine durchgehende Laserlinie (212) oder eine unterbrochene Laserlinie, insbesondere eine gepunktete Laserlinie (212) ist.

10. System (100) nach einem der Ansprüche 1 bis 9, wobei zumindest eine Linienlaserquelle (210) und/oder zumindest eine Positionslaserquelle (214a, 214b) eine gepulste Laserquelle ist.

11. System (100) nach einem der Ansprüche 1 bis 10, wobei die Steuereinheit (240) dazu eingerichtet ist, basierend auf den von den jeweiligen optischen Flächensensoren (230a, 230b, 230c) erfassten Bilddaten ein kalibriertes Höhenprofil (H) der Materialbahn (A) zu bestimmen.

12. System (100) nach Ansprüche 1 bis 11, wobei
die Steuereinheit (240) weiter dazu eingerichtet ist eine Abweichung der Materialbahn (A) von einer Soll-Planlage, insbesondere von einem Soll-Höhenprofil zu ermitteln, und
optional basierend auf der ermittelten Abweichung ein Temperierungssystem einer Anlage zur Herstellung einer Materialbahn (A) zu steuern oder zu regeln.

13. System (100) nach Ansprüche 1 bis 12, wobei die von den Laserlinien (112) überspannte Teilbreite der Materialbahn im Bereich von 3% bis 99% der Breite der Materialbahn liegt, oder im Bereich von 5% bis 90%, oder im Bereich von 10% bis 70%, oder im Bereich von 12% bis 65%.

14. Anlage (1) zur Herstellung einer Materialbahn (A), insbesondere einer Kunststofffolie, wobei die Anlage (1)
zumindest ein System (100) zur Inline-Bestimmung der Planlage der Materialbahn (A) nach einem der Ansprüche 1 bis 13 umfasst, sowie zumindest eines der folgenden:
eine Extrusionsanlage (2), eine Casting-Unit (3), eine Längsreckanlage (10), eine Querreckanlage (4) und/oder eine Simultanreckanlage.

15. Verfahren (1000) zur Inline-Bestimmung der Planlage einer Materialbahn (A), insbesondere einer Kunststofffolie, mittels eines Systems (100) nach einem der Ansprüche 1 bis 13, wobei das Verfahren (1000) die folgenden Schritte umfasst
- Projizieren (1100) von Laserlinien (212) mittels der Linienlaserquellen (210) auf eine bewegte Materialbahn (A)
- Erfassen (1200) von Bilddaten von zumindest einer projizierten Laserlinie (212) mittels eines optischen Flächensensors (230);
- Verarbeiten (1300) der Bilddaten, und
- basierend auf den verarbeiteten Bilddaten Bestimmen (1400) einer Planlage, insbesondere eines Höhenprofils (H) der Materialbahn (A).

16. Verfahren (1000) nach Anspruch 15, weiterhin umfassend
optional Anzeigen der bestimmten Planlage auf einer Anzeigevorrichtung;
Ermitteln (1500) einer Abweichung von einer Soll-Planlage, insbesondere von einem Soll-Höhenprofil, und
optional basierend auf der ermittelten Abweichung steuern und/oder regeln eines Temperierungssystems einer Anlage zur Herstellung einer Materialbahn (A) um die Planlage zu verbessern.

17. Verfahren (1000) nach Anspruch 15 oder 16, wobei das Verfahren weiterhin das Bestimmen zumindest eines Kennwerts für die Güte der bestimmten Planlage umfasst.
